# DEMANDE DE BREVET EUROPEEN

(11) **EP 0 994 070 A1**
(43) Date de publication de la demande: **19.04.2000**
(21) Numéro de dépôt: 99402480.0
(22) Date de dépôt: 08.10.1999
(51) Int. Cl.: C01B 15/013

(54) **Procédé de purification d' une solution aqueuse de peroxyde d'hydrogène contenant des impuretés**

(30) Priorité: 16.10.1998 FR 9813014
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Devos, Christine, 75321 Paris Cédex 07 (FR); Demay, Didier, 75321 Paris Cédex 07 (FR)
(74) Mandataire: Vesin, Jacques

(57) **Abrégé**

Procédé de purification d'une solution aqueuse de peroxyde d'hydrogène contenant des impuretés dont certaines d'entre elles sont sous forme ionique, dans lequel ladite solution aqueuse est purifiée par passage sur au moins une première résine de type anionique afin d'éliminer au moins certaines impuretés anioniques, puis sur une seconde résine de type cationique afin d'éliminer au moins certaines des impuretés cationiques, ou vice-versa caractérisé en ce que l'on dispose en parallèle au moins un premier et un second lit d'une première résine de type anionique, en ce que l'on dirige alternativement la solution aqueuse sur ledit premier ou sur ledit second lit, et en ce que l'on commute du premier lit vers le second lit (ou vice-versa) lorsque ledit premier est au moins partiellement saturé par l'un au moins des anions constituant les impuretés anioniques.

## Description

La présente invention concerne un procédé de purification d'une solution aqueuse de peroxyde d'hydrogène contenant des impuretés dont certaines d'entres elles sont sous forme ioniques, dans lequel ladite solution aqueuse est purifiée par passage sur au moins une première résine de type anionique afin d'éliminer au moins certaines des impuretés anioniques, puis sur une seconde résine de type cationique afin d'éliminer au moins certaines des impuretés cationiques, ou vice-versa.

Le peroxyde d'hydrogène est généralement fabriqué par auto-oxydation d'un dérivé de l'anthraquinone ou d'un mélange de tels dérivés. Le(s)dit(s) dérivés(s) de l'anthraquinone intervien(nen)t dissous dans un mélange complexe de solvants organiques, tels qu'un hydrocarbure aromatique mélangé à un ester ou un alcool. Cette solution constitue la solution de travail. Cette solution de travail est tout d'abord hydrogénée en présence d'un catalyseur, ce qui provoque la conversion des quinones en hydroquinones. Elle est ensuite oxydée par mise en contact avec de l'air ou de l'air enrichi en oxygène. Lors de cette oxydation, les hydroquinones sont oxydées, à nouveau, en quinones, avec formation simultanée de peroxyde d'hydrogène. Ledit peroxyde d'hydrogène est extrait à l'eau et la solution de travail subit un traitement de régénération avant d'être à nouveau utilisée.

La solubilité, dans la phase aqueuse, des composés organiques présents n'étant pas totalement nulle, la solution aqueuse de peroxyde d'hydrogène ainsi obtenue peut contenir jusqu'à 1000 mg/l de composés organiques dissous. Ces composés se présentent soit sous la forme d'ions, soit sous la forme de molécules non ioniques. En général, parmi les anions organiques, les ions acétates et formiates sont majoritaires.

Pour la purification d'une telle solution, on peut utiliser diverses techniques telles que l'extraction liquide-liquide, la distillation, la cristallisation, le passage sur résines adsorbantes et/ou échangeuses d'ions, l'osmose inverse, la filtration, l'ultrafiltration ...

Généralement, une telle solution aqueuse, obtenue par auto-oxydation d'au moins un dérivé de l'anthraquinone, subit une première distillation, visant notamment à la concentrer. Cette première distillation s'effectue, en principe, sur le site même de production du peroxyde d'hydrogène et est mise en oeuvre dans des installations métalliques, généralement en aluminium. Au contact de ces installations métalliques, la solution aqueuse de peroxyde d'hydrogène se charge en ions métalliques provenant de l'usure des surfaces desdites installations avec lesquelles elle est mise en contact. Cette contamination, par les ions métalliques, demeure néanmoins minime vis-à-vis de la contamination par les anions organiques inhérente au procédé d'auto-oxydation préalablement décrit.

La solution de peroxyde d'hydrogène ainsi produite après avoir été distillée une fois, est dite de qualité IPG ("Industrial Pure Grade"). Elle peut être directement utilisée dans les industries alimentaire et pharmaceutique. Elle peut aussi être purifiée pour atteindre une qualité supérieure destinée en particulier à l'industrie électronique, pour le nettoyage de la surface des tranches de silicium (" wafer ") sur lesquelles sont ultérieurement réalisés les circuits intégrés.

L'homme du métier différencie les grades VLSI, ULSI et SLSI dont la concentration pour chaque cation est respectivement inférieure à 100, 10 et 1 ppb. Il est apparu récemment une qualité ultra pure dont la concentration, pour chaque cation, est inférieure à 0,1 ppb.

La purification à partir d'une solution de qualité IPG se fait généralement en plusieurs étapes et inclut une seconde distillation suivie de passage(s) sur résines échangeuses d'ions, voire aussi d'au moins un passage sur résine adsorbante. Ladite distillation est mise en oeuvre dans des colonnes en verre, ce qui minimise les risques de pollution métallique. Cette seconde distillation a pour effet d'abaisser les concentrations en cations et anions dans les solutions de peroxyde d'hydrogène, en particulier la concentration en ions acétates. Ceci est dû à la pression de vapeur de l'acide acétique, environ 8 fois plus élevée que celle du peroxyde d'hydrogène à 20°C.

Le procédé selon l'invention, est un procédé de purification d'une solution aqueuse de peroxyde d'hydrogène, qui permet d'atteindre, à partir de la qualité IPG, une qualité convenant à l'industrie électronique, ledit procédé permettant de s'exonérer de la seconde distillation.

Le procédé selon l'invention est caractérisé en ce que l'on dispose en parallèle au moins un premier et un second lit d'une première résine de type anionique, en ce que l'on dirige alternativement la solution aqueuse sur ledit premier ou sur ledit second lit, et en ce que l'on commute du premier lit vers le second lit (ou vice-versa) lorsque la résine contenue dans le premier lit est au moins partiellement échangée par l'un au moins des anions constituant les impuretés anioniques.

Selon un mode préférentiel de l'invention, le procédé est caractérisé en ce que l'on utilise une pluralité de lits, disposés en parallèle, d'une première résine de type anionique, chaque lit étant successivement utilisé jusqu'à échange au moins partiel par l'un au moins des anions constituant les impuretés anioniques.

Par échange au moins partiel par l'un au moins des anions constituant les impuretés anioniques, on entend l'échange à au moins 50% de la capacité totale de la résine. De préférence, cette situation sera d'au moins 70%, et plus préférentiellement d'au moins 80%, de cette capacité totale, capacité totale bien connue de l'homme du métier.

L'un au moins des lits comportera de préférence une pluralité de résines, empilées en lits successifs ou mélangées entre elles, capables d'adsorber les impuretés anioniques avec une sélectivité différente.

Selon un mode de réalisation de l'invention, le procédé est caractérisé en ce que les impuretés anioniques organiques sont en nombre supérieur à celui des impuretés anioniques non organiques. De préférence, les impuretés anioniques organiques seront essentiellement sous forme d'acétates et de formiates.

Selon un mode préférentiel de réalisation de l'invention, les impuretés anioniques non organiques seront essentiellement sous forme de nitrate.

La concentration en ions acétates ramenée à une solution de peroxyde d'hydrogène à 30% en volume dans l'eau sera, selon l'invention, d'au moins environ 300 x 10⁻³ millieq/l.

La concentration en ions acétate ramenée à une solution de peroxyde d'hydrogène à 30% en volume dans l'eau sera plus préférentiellement d'au plus environ 2000 x 10⁻³ millieq/l.

En ce qui concerne la concentration en ions nitrate ramenée à une solution de peroxyde d'hydrogène à 30% en volume dans l'eau, celle-ci sera de préférence d'au moins environ 30 x 10⁻³ millieq/l et plus préférentiellement d'au plus environ 100 x 10⁻³ millieq/l.

Le débit de peroxyde d'hydrogène par volume de résine sera compris entre environ 4h⁻¹ et 40h⁻¹, de préférence entre 10h⁻¹ et 30h⁻¹, et encore plus préférentiellement entre 15h⁻¹ et 25h⁻¹.

Selon une variante de réalisation de l'invention, au moins une des résines anioniques utilisée est capable d'échanger les ions acétates et/ou nitrates. De préférence, au moins une de ces résines anioniques utilisées sera un copolymère de styrène et de divinylbenzène.

Selon une autre variante de réalisation de l'invention, l'une au moins des résines utilisées sera du type 1, c'est à dire comportant un groupement fonctionnel qui est un groupement ammonium quaternaire, obtenu par amination d'un copolymère chlorométhylé de styrène et de divinylbenzène. De préférence, le contre-ion utilisé avec la résine copolymère citée ci dessus, sera un ion bicarbonate.

Selon une variante de réalisation de l'invention, la seconde résine de type cationique sera disposée sous la forme d'un lit comportant au moins une résine cationique, tandis que lorsque l'on utilise plusieurs résines cationiques empilées en lits successifs ou mélangées entre elles, au moins une des résines cationiques sera, selon une variante de l'invention, un copolymère de styrène et de divinylbenzène. De préférence, ce copolymère sera fortement acide.

De manière plus préférentielle, la résine cationique sous forme de copolymère de styrène et de divinylbenzène comportera un groupement fonctionnel qui est un groupement sulfonique.

D'une manière générale, la seconde résine cationique sera dispersée sous forme d'une pluralité de lits disposés en série et/ou en parallèle. De préférence, l'une au moins des résines cationiques sera capable d'échanger l'un au moins des ions Na⁺, AI³⁺, et/ou Fe³⁺.

D'une manière générale, la solution aqueuse de peroxyde d'hydrogène comportera entre 0.5 x 10⁻³ millieq/l. et 20 x10⁻³ millieq/l. de sodium, tandis qu'elle comportera également ou alternativement entre 2.10⁻³ et 20.10⁻³ millieq/1. d'aluminium et elle comportera également ou alternativement entre 0,05.10⁻³ et 0,5.10⁻³ millieq/l. de fer.

La solution du peroxyde d'hydrogène utilisée sera en général d'abord mise en contact avec un adsorbant de matière organique neutre avant d'être mis en contact avec au moins une résine anionique et/ou cationique ou vice-versa : on préférera placer la résine anionique avant la résine cationique dans le cas ou la solution de peroxyde d'hydrogène pourrait extraire des cations, tels que le sodium, contenus dans le squelette de la résine anionique. Ceux-ci seront alors retenus sur la résine cationique (et non ajoutés aux peroxyde). Inversement, on placera la résine cationique avant la résine anionique si des anions (tels que les sulfates) sont susceptibles d'être extraits de la résine cationique. De préférence, au moins l'un des lits d'au moins une des résines utilisées sera pourvu de moyen de sécurité capable d'enclencher un rinçage de l'un au moins des lits lorsqu'une anomalie est détectée dans le déroulement d'au moins une étape de procédé. Ce rinçage sera de préférence effectué avec de l'eau et encore plus préférentiellement avec de l'eau très pure de manière à ne pas introduire d'impuretés et à redémarrer le système plus rapidement après avoir réparé l'anomalie.

La résistivité de l'eau utilisée sera ainsi de préférence supérieure à 18 MΩ cm à 25°C.

Les moyens de sécurité comporteront de préférence des moyens pour mesurer le débit de solution de peroxyde d'hydrogène sur le lit de résine, de manière à déclencher le rinçage desdites résines lorsque la valeur de débit mesuré est inférieure à une valeur prédéterminée de l'ordre de 4 fois le volume de résine dans la colonne par heure.

Les moyens de sécurité comporteront également de préférence au moins une sonde de détection de la température de la solution de peroxyde d'hydrogène qui est en contact avec le lit de résine. Il est également possible de prévoir des moyens de sécurité sensibles au fonctionnement anormal de l'une des utilités mises en oeuvre au cours du procédé, tel que l'alimentation en électricité, en eau, en air comprimé et/ou à l'actionnement d'un interrupteur d'urgence. Bien que ceci ne soit pas indispensable au fonctionnement du procédé de l'unité selon l'invention, ce mode de réalisation préférentiel ajoute énormément à la sécurité de fonctionnement d'une telle installation ce qui est particulièrement bénéficiaire pour l'utilisateur.

Afin d'assurer au système une autonomie et une grande sécurité, on prévoira en règle générale une réserve d'eau ultra pure dans ce système de manière à pouvoir effectuer le rinçage décrit ci dessus, opération de rinçage effectuée par un système appelé "déluge".

Les procédé et dispositif de l'invention sont, de manière générale, particulièrement avantageux en référence au problème de la sécurité, au risque de décomposition de peroxyde d'hydrogène dans les colonnes chargées de résines anioniques. A un volume important de résine anionique, selon l'art antérieur, on substitue, selon l'invention, plusieurs petits volumes. Ceci est explicité en détail plus loin dans le présent texte.

De manière générale, le procédé de l'invention a été conçu pour la purification d'une solution aqueuse de peroxyde d'hydrogène contenant des impuretés organiques et métalliques, présentes sous forme ionique ou non; les anions, majoritaires, étant sous forme organique. Ledit procédé comprend également le passage de ladite solution sur des résines échangeuses d'ions, sur au moins une résine anionique et sur au moins une résine cationique. Le passage de ladite solution sur résine(s) anionique(s) comprend son passage sur une colonne d'un ensemble d'au moins deux colonnes, montées en parallèle, contenant une résine anionique; la solution traitée étant dérivée, avantageusement sans interruption du procédé, de l'amont d'une desdites colonnes de l'ensemble, lorsque la résine anionique contenue dans ladite colonne est au moins partiellement saturée, vers une autre desdites colonnes dudit ensemble.

Dans le cadre de la mise en oeuvre du procédé de l'invention, on fait donc intervenir un ensemble de colonnes anioniques, montées en parallèle. On peut ainsi dériver le flux traité de l'une quelconque des colonnes de l'ensemble vers une autre desdites colonnes de l'ensemble. Cette dérivation est avantageusement mise en oeuvre sans interruption du procédé. En tout état de cause, avec ou sans interruption de procédé, cette dérivation rend la mise en oeuvre du procédé, plus souple et moins dangereuse. Elle permet, d'une part, de s'exonérer de l'attente, inévitable selon l'art antérieur, pendant le rinçage et la régénération de la résine anionique intervenant dans une colonne d'un circuit de purification classique, ladite résine anionique étant saturée plus rapidement que son homologue cationique intervenant dans une autre colonne, lesdites colonnes étant montées en série. Elle permet, d'autre part, de travailler, en sécurité, avec de petits volumes de résine anionique. Lesdits petits volumes (remplissant les n colonnes de l'ensemble) interviennent, avantageusement, en alternance.

Le circuit de purification convenant à la mise en oeuvre du procédé de l'invention comprend donc l'ensemble des colonnes anioniques montées en parallèles ainsi qu'en amont et/ou en aval dudit ensemble au moins une colonne cationique, montée en série dudit ensemble. Selon une variante de réalisation, ledit circuit de purification comporte au moins une autre colonne anionique montée en série.

On peut ainsi, selon l'invention, à partir de solutions de qualité IPG obtenir des solutions de qualité dite "électronique".

De préférence, le passage des solutions traitées sur les résines anionique(s) et cationique(s) est avantageusement mis en oeuvre en flux ascendant.

L'homme du métier sait que les résines anioniques sont susceptibles de décomposer le peroxyde d'hydrogène, maintenu trop longtemps à leur contact. Cette décomposition du peroxyde d'hydrogène s'accompagne d'une augmentation de température qui elle risque d'endommager les résines, et d'un dégagement d'oxygène susceptible de provoquer l'explosion de colonnes renfermant lesdites résines. On comprend que, dans de telles conditions, lors de la mise en oeuvre du procédé de l'invention, lorsque le flux traité est dérivé d'une colonne de l'ensemble vers une autre colonne dudit ensemble, la résine anionique contenue dans ladite colonne, ainsi mise hors circuit (du fait de son degré de saturation), est de préférence immédiatement rincée. Pour la mise en oeuvre d'un tel rinçage, on utilisera de préférence de l'eau, injectée de préférence par le bas de la colonne à rincer.

On met avantageusement à profit la mise hors circuit d'une colonne pour régénérer la résine qu'elle contient. Ladite colonne sera alors opérationnelle, prête à recevoir à nouveau un flux de solution à traiter.

La régénération des résines peut être mise en oeuvre au sein de la colonne. Elle peut également être mise en oeuvre sur ladite résine, sortie de la colonne, de manière connue en soi.

On a indiqué que, dans le cadre du procédé de l'invention, la solution traitée est passée sur au moins une résine anionique et sur au moins une résine cationique. Avantageusement, son passage sur résine(s) anionique(s) est mis en oeuvre en amont de son passage sur résine(s) cationique(s). Ledit passage sur résine(s) anionique(s) comprend, de façon caractéristique, son passage dans une colonne d'un ensemble d'au moins deux colonnes, montées en parallèle. Il peut comprendre en outre son passage sur au moins une colonne montée en série dudit ensemble de colonnes montées en parallèles et/ou son passage dans une colonne d'un autre ensemble d'au moins deux colonnes, montées en parallèle. Une même résine anionique ou des résines anioniques différentes peuvent intervenir dans ces colonnes anioniques, montées en série et/ou en parallèle.

De la même façon, le passage sur résine(s) cationique(s) peut être réalisé selon plusieurs variantes. Dans une première variante, on trouve sur le circuit de purification, une unique colonne cationique ou plusieurs colonnes cationiques montées en série, ou en parallèle.

De préférence, afin d'éviter tout risque de décomposition du peroxyde d'hydrogène au contact des résines anionique(s) et cationique(s), le procédé de l'invention est mis en oeuvre à une température comprise entre 0 et 25°C de préférence entre 0 et 15°C et, encore plus préférentiellement, à une température sensiblement égale à environ 10°C (à +/- 2°C).

En référence au problème de la dégradation des résines intervenantes, on peut préciser ici que les solutions aqueuses traitées sont rarement des solutions aqueuses de peroxyde d'hydrogène renfermant plus de 60 % en poids de peroxyde d'hydrogène. Les solutions traitées selon l'invention sont généralement des solutions aqueuses qui contiennent de 10 à 60 % en poids de peroxyde d'hydrogène. Le procédé de l'invention convient tout particulièrement pour la purification de solutions aqueuses à 30 % en poids, notamment destinées à être utilisées dans l'industrie électronique.

Les résines utilisées dans le cadre de la présente invention sont par exemple celles décrites dans US-A-3305314.

De préférence, on utilisera des résines cationiques fortement acides, obtenues par sulfonation d'un copolymère de styrène et de divinylbenzène. De préférence également, on utilisera des résines anioniques de type 1, obtenues par amination d'un copolymère chlorométhylé de styrène et de divinylbenzène.

Le procédé de purification de l'invention peut également inclure, en amont et/ou en aval du traitement sur résines, tout traitement complémentaire d'une autre nature, tel que le passage sur une résine adsorbante et/ou une étape de cristallisation pour éliminer le carbone organique présent sous forme non ionique dans les solutions aqueuses de peroxyde d'hydrogène.

Dans l'hypothèse où le procédé de l'invention est mis en oeuvre pour la production de solutions aqueuses de peroxyde d'hydrogène très pures, notamment destinées à l'industrie électronique, le traitement original décrit (sur résines échangeuses d'ions) peut être suivi d'une étape de purification supplémentaire, avantageusement mise en oeuvre sur le site d'utilisation desdites solutions, ce qui permet d'éviter leur contamination pendant leur transport.

La présente invention concerne également un dispositif de purification d'une solution aqueuse de peroxyde d'hydrogène contenant des impuretés organiques et/ou métalliques présentes sous forme ionique ou non, les anions, majoritaires, étant sous forme organique.

Ledit dispositif comprend, de façon caractéristique :
- au moins une colonne contenant une résine cationique,
- un ensemble d'au moins deux colonnes contenant une résine anionique, montées en parallèle, et
- un système pour dériver la solution traitée de l'amont de l'une des colonnes dudit ensemble vers une autre des colonnes dudit ensemble.

Le dispositif est avantageusement conçu de sorte que les colonnes soient alimentées en flux ascendant.

Chacune des colonnes dudit dispositif comporte en général :
- une canalisation, en bas de colonne, utile au passage du liquide de rinçage (tel que de l'eau) pour rincer ladite colonne et au passage de la solution de régénération pour régénérer la résine contenue dans ladite colonne;
- d'une canalisation, en haut de colonne, utile à l'évacuation, vers les rejets, du liquide de rinçage et de la solution de régénération usagés.

Par ailleurs, ledit dispositif comprend avantageusement un système de mise en sécurité des colonnes. Un tel système comprend un ensemble de canalisations et des moyens adéquats (vannes, réserves d'eau, éventuellement moyens de refroidissement de ladite eau...) pour assurer le passage d'eau, éventuellement refroidie, indépendamment dans chacune des colonnes, à un débit préférentiellement supérieur au débit de fonctionnement de l'unité. Ledit système de sécurité est agencé pour être déclenché, en principe, aussi bien manuellement qu'automatiquement, en cas, par exemple, d'augmentation de température dans une colonne ou en cas d'arrêt anormal du débit de solution aqueuse de peroxyde d'hydrogène, quand l'unité est en fonctionnement.

L'unité de purification selon l'invention comprendra de préférence un système de sécurité permettant de rincer à l'eau la ou les résines contenues dans chaque colonne, de manière à en éliminer le peroxyde d'hydrogène en un temps très court. Chaque colonne sera ainsi de préférence munie d'une canalisation d'arrivée et de sortie d'eau indépendantes, différentes des canalisations qui servent au fonctionnement normal de l'unité de manière à pouvoir créer un rinçage très rapide des résines. Le diamètre des canalisations de ce système sera adapté de telle sorte que chaque résine soit rincée avec au moins cinq fois son volume d'eau en moins de cinq minutes, de manière très préférentielle (pour les conditions de sécurité minimum, voir les limites citées ci avant).

L'arrivée et la sortie de l'eau se feront par l'intermédiaire de préférence de vannes pneumatiques normalement ouvertes en position de sécurité. L'unité se mettra en position de sécurité lorsqu'un risque d'immobiliser du peroxyde d'hydrogène sur une des résines, aura été détecté ou en cas d'augmentation de la température du liquide, notamment dans les colonnes ou à la sortie de celles-ci. La position de sécurité peut également être provoquée par la perte de l'alimentation électrique, la perte de l'alimentation en air comprimé, la perte du contrôle et/ou de la commande de l'appareil, ou par action de l'opérateur sur un bouton d'arrêt d'urgence pour une raison choisie par l'opérateur. L'eau servant à rincer les résines sera de préférence une eau ultra pure de résistivité supérieure à 18 MΩ.cm à 25°C de telle sorte que l'unité soit prête à redémarrer après rinçage des résines. Pour assurer l'alimentation en eau ultra pure, il sera préférable d'ajouter un container dédié à cette fonction de rinçage, dont le volume sera suffisant pour rincer les colonnes en fonctionnement. Dans le cas où il n'est pas possible d'ajouter un stockage d'eau ultra pure, le rinçage des résines pourra se faire avec de l'eau de ville et notamment lorsque l'alimentation en eau ultra pure sera hors service.

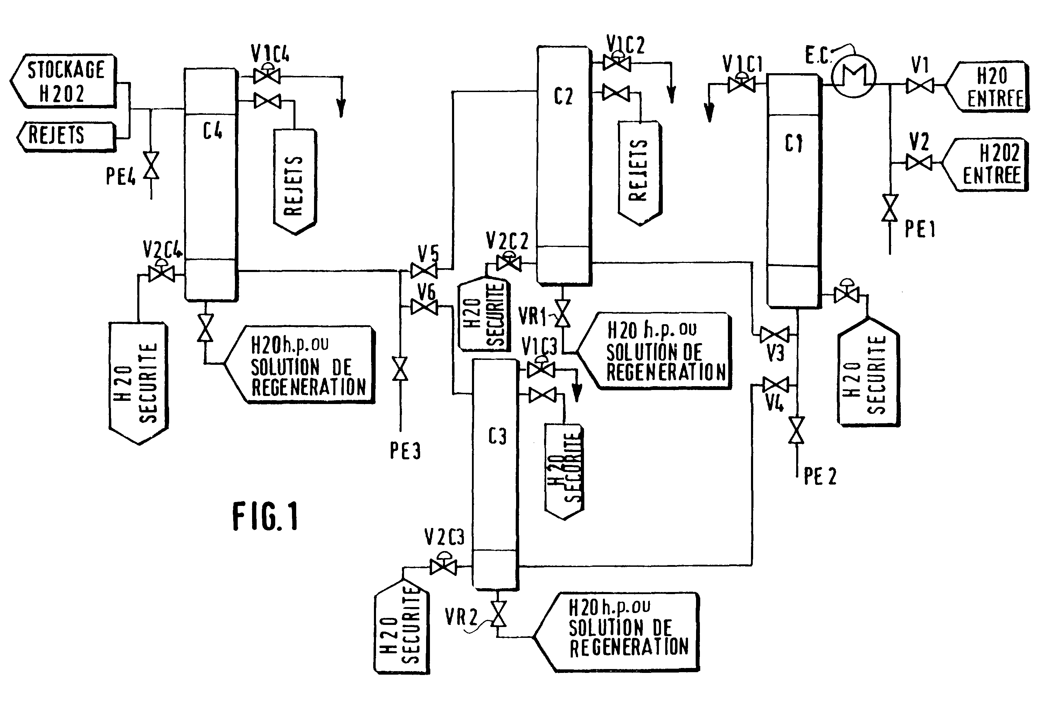

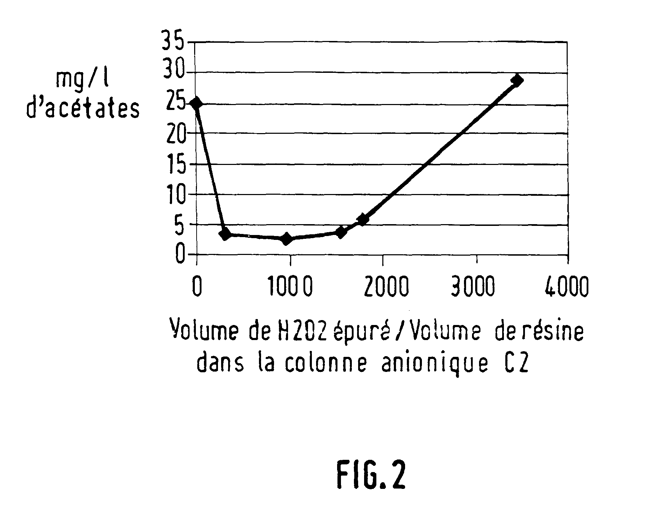

L'invention est maintenant décrite, de façon non limitative, à l'aide des figures 1 et 2 ci-jointes et des exemples décrits ci après.

### Exemple

L'installation décrite sur la figure 1, représente un exemple de réalisation de la présente invention. L'unité est construite avec des matériaux adaptés à la production de produits chimiques ultra purs utilisés dans l'industrie électronique. Le corps des colonnes est en PVDF et a un diamètre intérieur de l'ordre de 12cm, les canalisations, les vannes et les éléments des pompes en contact avec le produit sont en PFA.

La colonne Cl contient un matériau adsorbant tel que celui vendu sous la dénomination commerciale « AMBERSORB XAD4 » par la société Rohm & Haas. Cet adsorbant est destiné à retenir les matières organiques non ioniques contenues dans la solution de peroxyde d'hydrogène à purifier.

Les colonnes C2 et C3 sont chargées avec une résine échangeuse d'anions telle que la résine vendue sous la dénomination commerciale « AMBERLITE IRA958 » par la société Rohm & Haas. Cette résine est traitée de manière connue en soi pour changer la forme ionique de C1⁻ en HCO₃⁻, avant d'être mise en place dans les colonnes. Sa capacité totale d'échange est égale à 0.8 eqCl⁻/ litre ± 0.2.

La résine échangeuse de cations telle que celle commercialisée par la société Dow Chemicals sous la dénomination commerciale « DOWEX C75 NGH », est chargée dans la colonne C4. Sa capacité totale d'échange est égale à 1.7eq H⁺/litre ± 0.2.

L'installation comprend un dispositif de sécurité destiné à rincer très rapidement, avec un débit de 8 l/min, les résines avec de l'eau ultra pure. Ce dispositif peut être actionné par l'opérateur ou déclenché automatiquement au cours de l'épuration dans le cas où le débit de peroxyde d'hydrogène est arrêté, ou dans le cas où une montée en température dans une des colonnes est détectée.

Ce rinçage très rapide des 3 colonnes en fonctionnement s'effectue par l'intermédiaire des vannes pneumatiques V1C1 et V2C1 pour Cl, V1C2 et V2C2 pour C2, V1C3 et V2C3 pour C3, V1C4 et V2C4 pour C4.

Une solution aqueuse de peroxyde d'hydrogène 30.1% monodistillée de qualité IPG (Industrial Pure Grade) est envoyée, par l'intermédiare d'une pompe à un débit de 2.5 litres/min, vers un échangeur de chaleur E.C. où elle est refroidie à 10°C.

Le peroxyde d'hydrogène ainsi refroidi, traverse la colonne Cl de haut en bas puis la colonne C2 ou C3 de bas en haut. Les vannes V4 et V6 sont fermées et les vannes V3 et V5 sont ouvertes. Après passage dans la colonne C2 ou C3 (selon l'invention) contenant la résine anionique, la solution de peroxyde d'hydrogène est pompée de bas en haut dans la colonne C4 puis envoyée vers le stockage de produit fini. La charge volumique dans chacune des colonnes C1 à C4 est égale à 19h⁻¹.

Des échantillons sont prélevés régulièrement après les colonnes C2 (ou C3) et C4 par les vannes de prises d'échantillons, respectivement PE3 et PE4. Les concentrations des ions acétates et sodium sont mesurées dans les échantillons ainsi recueillis.

Les concentrations dans le peroxyde d'hydrogène avant épuration sont : Na = 0.3 mg/l ou 13.10⁻⁶ équivalents/litre
CH₃CO₂ = 25ppm ou 400.10⁻⁶ équivalents/litre.

La figure 2 montre la concentration en acétates en fonction de la quantité de peroxyde d'hydrogène épuré. Après environ une quantité, en litres, de peroxyde d'hydrogène équivalente à 1500 fois le volume de résine contenu dans la colonne C2, on considère que l'échangeur d'anions est saturé.

Le calcul théorique montre que les acétates retenus prennent 70% de la capacité totale de la résine anionique, le reste est pris par les autres anions, tels que les nitrates et phosphates.

La concentration en ions sodium dans le peroxyde d'hydrogène épuré, après analyse par ICP/MS, est trouvée inférieure à 0.1µg/l. Le calcul théorique montre que seulement 9% de la capacité totale de la résine cationique contenue dans la colonne C4 sont occupés par des ions sodium après épuration d'une quantité égale à 1500 fois le volume du lit de résine anionique.

Après un volume de peroxyde d'hydrogène équivalent à 1500 fois le volume de résine anionique contenue dans C2 (résine considérée comme « saturée » et qu'il faut donc régénérer), les vannes V3 et V5 sont fermées et les vannes V4 et V6 sont simultanément ouvertes. L'épuration du peroxyde d'hydrogène peut ainsi continuer sans interruption, selon le procédé de l'invention.

Pendant que les colonnes C1, C3 et C4 sont utilisées, la résine anionique contenue dans la colonne C2 est régénérée par une solution aqueuse de bicarbonate de sodium 1N par l'intermédiaire de canalisation dédiées (simplement représentée schématiquement sur la figure sous la vanne VR1 « solution de régénération »). La résine est ensuite rincée par de l'eau de haute pureté, de résistivité au moins égale à 18MΩ.cm, jusqu'à élimination complète des traces de la solution de régénération.

Après saturation de la résine anionique contenue dans C3, le basculement du flux de peroxyde d'hydrogène se fera sur la colonne C2 et la résine contenue dans C3 sera régénérée.

Chaque colonne anionique sera de préférence ainsi régénérée au moins 3 fois avant rinçage de l'unité par de l'eau ultra pure pour permettre le renouvellement de l'adsorbant dans Cl et de la résine cationique dans C4.

## Revendications

1. Procédé de purification d'une solution aqueuse de peroxyde d'hydrogène contenant des impuretés dont certaines d'entre elles sont sous forme ionique, dans lequel ladite solution aqueuse est purifiée par passage sur au moins une première résine de type anionique afin d'éliminer au moins certaines impuretés anioniques, puis sur une seconde résine de type cationique afin d'éliminer au moins certaines des impuretés cationiques, ou vice-versa caractérisé en ce que l'on dispose en parallèle au moins un premier et un second lit d'une première résine de type anionique, en ce que l'on dirige alternativement la solution aqueuse sur ledit premier ou sur ledit second lit, et en ce que l'on commute du premier lit vers le second lit (ou vice-versa) lorsque la résine contenue dans le premier lit est au moins partiellement échangée par l'un au moins des anions constituant les impuretés anioniques.

2. Procédé selon la revendication 1, caractérisé en ce que l'on utilise une pluralité de lits disposés en parallèle d'une première résine de type anionique, chaque lit étant successivement utilisé jusqu'à échange au moins partiel par l'un au moins des anions constituant les impuretés anioniques.

3. Procédé selon les revendications 1 ou 2, caractérisé en ce que l'un au moins des lits comporte une pluralité de résines, empilées en lits successifs ou mélangées entre elles, capables d'échanger les impuretés anioniques avec une sélectivité différente.

4. Procédé selon les revendications 1 à 3, caractérisé en ce que les impuretés anioniques organiques sont en nombre supérieur à celui des impuretés anioniques non organiques.

5. Procédé selon les revendications 1 à 4, caractérisé en ce que les impuretés anioniques organiques sont essentiellement sous forme d'acétates et de formiates.

6. Procédé selon les revendications 1 à 5, caractérisé en ce que les impuretés anioniques non organiques sont essentiellement sous forme de nitrate.

7. Procédé selon les revendications 1 à 6, caractérisé en ce que la concentration en ions acétates ramenée à une solution de peroxyde d'hydrogène à 30% vol. dans l'eau est d'au moins environ 300x10⁻³ millieq/1.

8. Procédé selon les revendications 1 à 7, caractérisé en ce que la concentration en ions acétates ramenée à une solution de peroxyde d'hydrogène à 30% vol. dans l'eau est d'au plus environ 2000x10⁻³ millieq/1.

9. Procédé selon les revendications 1 à 8, caractérisé en ce que la concentration en ions nitrates ramenée à une solution de peroxyde d'hydrogène à 30% vol. dans l'eau est d'au moins environ 30x10⁻³ millieq/1.

10. Procédé selon les revendications 1 à 9, caractérisé en ce que la concentration en ions nitrates ramenée à une solution de peroxyde d'hydrogène à 30% vol. dans l'eau est d'au plus environ 100x10⁻³ millieq/1.

11. Procédé selon les revendications 1 à 10, caractérisé en ce que le débit de peroxyde d'hydrogène par volume de résine est compris entre 4 et 40 h⁻¹.

12. Procédé selon les revendications 1 à 11, caractérisé en ce que le débit de peroxyde d'hydrogène par volume de résine est compris entre 10 et 30 h⁻¹.

13. Procédé selon les revendications 1 à 12, caractérisé en ce que le débit de peroxyde d'hydrogène par volume de résine est compris entre 15 et 25 h⁻¹.

14. Procédé selon l'une des revendications 1 à 13, caractérisé en ce qu'au moins une des résines anioniques utilisées est capable d'absorber les ions acétates et/ou nitrates.

15. Procédé selon les revendications 1 à 14, caractérisé en ce qu'au moins une des résines anioniques utilisées est un copolymère de styrène et de divinylbenzène.

16. Procédé selon la revendication 15, caractérisé en ce que l'une au moins des résines utilisées est de type 1 obtenue par amination d'un copolymère chlorométhylé de styrène et de divinylbenzène.

17. Procédé selon la revendication 16, caractérisé en ce que la forme ionique de l'une au moins des résines utilisées est HCO₃⁻.

18. Procédé selon l'une des revendications 1 à 17, caractérisé en ce que la seconde résine de type cationique est disposée sous la forme d'un lit comportant au moins une résine cationique.

19. Procédé selon la revendication 18, caractérisé en ce que l'une au moins des résines cationiques est un copolymère de styrène et de divinylbenzène.

20. Procédé selon la revendication 19, caractérisé en ce que le copolymère est fortement acide.

21. Procédé selon la revendication 20, caractérisé en ce que la forme ionique de l'une ou moins des résines utilisées est H⁺.

22. Procédé selon l'une des revendications 1 à 21, caractérisé en ce que la seconde résine cationique est dispersée sous forme d'une pluralité de lits disposés en série et/ou en parallèle.

23. Procédé selon l'une des revendications 1 à 22, caractérisé en ce que l'une au moins des résines cationiques est capable d'adsorber l'un au moins des ions Na⁺, Al³⁺ et/ou Fe³⁺.

24. Procédé selon l'une des revendications 1 à 23, caractérisé en ce que la solution aqueuse de peroxyde d'hydrogène comporte entre 0.5x10⁻³millieq/1 et 20x10⁻³ millieq/l. de sodium.

25. Procédé selon l'une des revendications 1 à 24, caractérisé en ce que la solution aqueuse de peroxyde d'hydrogène comporte entre 2x10⁻³ et 20x10⁻³ millieq/1 d'aluminium.

26. Procédé selon l'une des revendications 1 à 25, caractérisé en ce que la solution aqueuse de peroxyde d'hydrogène comporte entre 0.05x10⁻³ et 0.5x10⁻³ millieq/1 de fer.

27. Procédé selon l'une des revendications 1 à 26, caractérisé en ce que le peroxyde d'hydrogène utilisé est de qualité dite industrielle (" IPG ").

28. Procédé selon l'une des revendications 1 à 27, caractérisé en ce que la solution de peroxyde d'hydrogène est d'abord mise en contact avec un adsorbant de matière organique neutre avant d'être mise en contact avec au moins une résine anionique et/ou cationique ou vice-versa.

29. Procédé selon l'une des revendications 1 à 28, caractérisé en ce que au moins l'un des lits d'au moins une des résines utilisées est pourvu de moyens de sécurité capables d'enclencher un rinçage de l'un au moins des lits lorsqu'une anomalie est détectée dans le déroulement d'au moins une étape de procédé.

30. Procédé selon la revendication 29, caractérisé en ce que le rinçage est effectué avec de l'eau, de préférence avec de l'eau très pure.

31. Procédé selon la revendication 30, caractérisé en ce que la résistivité de l'eau est supérieure ou égale à 18 MΩ.cm à 25°C.

32. Procédé selon l'une des revendications 28 à 31, caractérisé en ce que les moyens de sécurité comportent des moyens pour mesurer le débit de solution de peroxyde d'hydrogène sur le lit de résine, de manière à déclencher le rinçage des dites résines lorsque la valeur de débit mesurée est inférieure à une valeur prédéterminée, de quatre fois le volume de résine dans la colonne par heure.

33. Procédé selon l'une des revendications 28 à 32, caractérisé en ce que les moyens de sécurité comportent au moins une sonde de détection de la température de la solution de peroxyde d'hydrogène qui est en contact avec le lit de résine

34. Procédé selon l'une des revendications 28 à 33, caractérisé en ce que les moyens de sécurité sont également sensibles au fonctionnement anormal de l'une des utilités mise en oeuvre au cours du procédé telle que l'alimentation en électricité, en eau, en air comprimé et/ou à l'actionnement d'un interrupteur d'urgence.
